# EUROPEAN PATENT SPECIFICATION

(11) **EP 1 585 950 B1**
(45) Date of publication and mention of the grant of the patent: **26.12.2007**
(21) Application number: 03775298.7
(22) Date of filing: 05.11.2003
(51) Int. Cl.: G01J 5/04, C21C 5/46

(54) **A PROCESS FOR KEEPING A TUYERE PASSING THROUGH A METALLURGICAL VESSEL FREE OF A SKULL**
VERFAHREN UM EINE DURCH EIN METALLURGISCHES GEFÄSS DURCHTRETENDE DÜSE FREI VON SKULL ZU HALTEN
PROCEDE PERMETTANT D'EVITER LA FORMATION D'UN FOND DE POCHE DANS UNE TUYERE TRAVERSANT UN RECIPIENT METALLURGIQUE

(30) Priority: 19.12.2002 DE 10259830
(43) Date of publication of application: 19.10.2005
(73) Proprietor: Specialty Minerals Michigan Inc., Bingham Farms, Michigan 48025 (US)
(72) Inventor: CARLHOFF, Christoph, 47877 Willich (DE); MERKENS, Wilhelm, 41836 Hückelhoven (DE); LAMM, Rolf, 52076 Aachen (DE)
(74) Representative: UEXKÜLL & STOLBERG
(86) International application number: PCT/EP2003/012349
(87) International publication number: WO 2004/057286

(56) References cited:
- EP-A- 0 645 601
- EP-A- 1 134 295
- LU-A- 90 610
- US-A- 4 416 443
- US-A- 4 619 533
- US-A- 5 283 608
- US-A- 5 315 341
- PATENT ABSTRACTS OF JAPAN vol. 010, no. 036 (C-328), 13 February 1986 (1986-02-13) & JP 60 187608 A (KAWASAKI SEITETSU KK), 25 September 1985 (1985-09-25)
- CARLHOFF C ET AL: "LASERINDUZIERTE EMISSIONSSPEKTROSKOPIE FUER DIE DIREKTANALYSE VON FLUESSIGEM STAHL IM KONVERTER" LASER UND OPTOELEKTRONIK, FACHVERLAG GMBH. STUTTGART, DE, vol. 23, no. 4, 1 August 1991 (1991-08-01), pages 50-52, XP000216633 ISSN: 0722-9003
- PATENT ABSTRACTS OF JAPAN vol. 2000, no. 02, 29 February 2000 (2000-02-29) & JP 11 326061 A (SUMITOMO METAL IND LTD), 26 November 1999 (1999-11-26)

## Description

### Background of the invention

The invention relates to a process for the keeping free a tuyere passing through a metallurgical vessel of a skull by intermittendly passing an oxygen-containing gas through the tuyere to dissolve the skull.

A common method to measure the temperature of molten metal in a container, such as e.g. a metallurgical vessel, is by means of a pyrometer. Normally, a non-contacting type radiation pyrometer is arranged at the end of a nozzle base which is part of a gas blowing tuyere. The tuyere is arranged at the bottom or at the side wall of the metallurgical vessel. The pyrometer can also be arranged at one end of a measuring channel introduced into the melt from the top of the metallurgical vessel. Such arrangements are e.g. disclosed in DE-OS 964 991, DE-A-4 025 909, EP-A-0 362 577, US-A-3 161 499, EP-A-0 162 949, DE-OS-2 438 142, US-A-4 400 097, JP-A-62 207 814, EP-A-1 134 295, US-A-4 619 533, JP 60 187608 and LU 90 610A.

Generally non-reactive gas is blown through the tuyere into the inside of the melt to keep its opening free. Nevertheless, skulls may build up in the measuring channel since metal freezes at the outlet of the tuyere so that the measuring channel is clogged from time to time. The frozen metal at the outlet of the tuyere may be dissolved by means of blowing oxygen through the channel. In this way the clogging of the tuyere may be prevented. However, oxygen distorts the measured values considerably and promotes wear of the measuring channel. Therefore, oxygen must be blown intermittendly through the channel.

### Summary of the invention

The object has been solved by a process a defined in claim 1 for keeping a tuyere passing through a metallurgical vessel free of a skull by intermittendly passing an oxygen-containing gas through the tuyere to dissolve the skull, wherein it is determined that an interval for passing the oxygen-containing gas through the tuyere needs to be started by detecting electromagnetic radiation emanating from a spot in the interior of the melt by means of a dual wavelength pyrometer and comparing the intensity of the pyrometer signals with the ratio of the pyrometer signals, and initiating the interval for passing the oxygen-containing gas through the tuyere, upon the condition that the combined intensity of the signals falls below a predetermined threshold value and that the ratio of the signals remains substantially constant. Preferably the threshold value is determined by using a video camera which is arranged with the pyrometer along one optical path and by setting into relation the intensity of the pyrometer signal with the image of the video camera, deciding on the basis of the video image whether a status of clogging is reached and determining the corresponding intensity value of the combined pyrometer signals.

Another object has been solved by providing an apparatus which includes the features of claim 5.

Preferably the apparatus further includes a laser device suitable for creating a plasma in the interior of the metallurgical vessel, and wherein the further detector is a spectrometer capable of detecting electromagnetic radiation emanating from the plasma. More preferably, the apparatus is connected to the interior of the metallurgical vessel by means of a tube which is passed through the tuyere.

### Detailed description of the invention

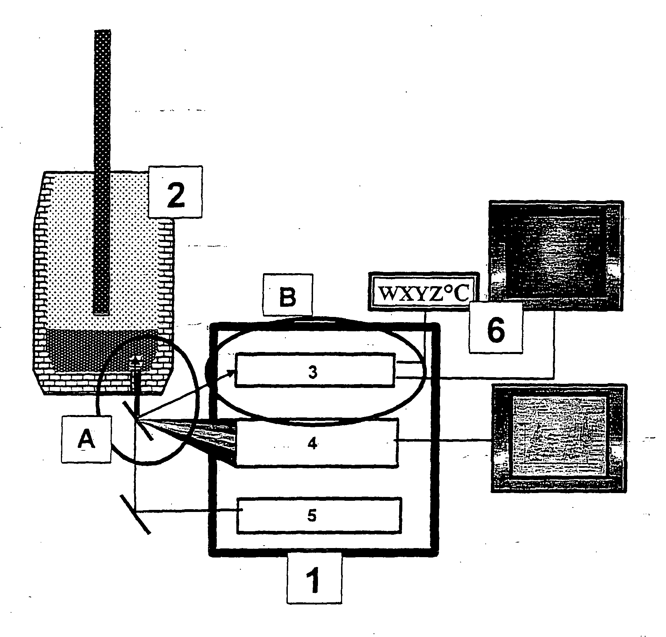

Figure **1** shows a preferred configuration of the apparatus of the present invention. The apparatus **1** is connected to a container **2** such as a metallurgical vessel containing a melt, preferably a molten metal. The container **2** is preferably a converter. A blowing lance may be inserted into the melt from the top for blowing oxygen into the melt, thereby converting iron into steel. Alternatively, the oxygen many be blown into the converter through tuyeres at the bottom and/or side walls of the container **2.** The apparatus **1** is connected to the inner side of the container **2** via a tuyere. The tuyere forms a measuring channel **A** through which electromagnetic radiation emitted from the inner side of the container may pass. The tuyere has one end facing the interior of the container. The second end of measuring channel **2** faces a first measuring unit **3** which preferably includes a dual wavelength pyrometer and a video camera. Preferably a spectrometer **4** and a laser generating unit **5** are also connected to the measuring channel. Most preferably data processing devices **6** are connected to the measuring unit **3.**

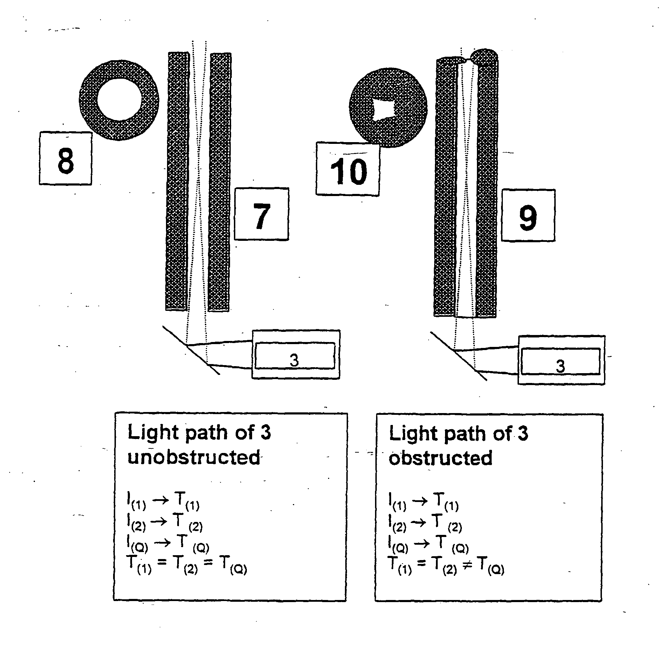

Figure **2** schematically shows a detailed cross sectional and bottom views of the measuring channel (which indicated as **A** in Figure **1).** Electromagnetic radiation may pass unhindered through the unobstructed measuring channel **7,** as schematically shown in the bottom view **8.** Once clogging occurs at the top of measuring channel **9,** the passage of electromagnetic radiation is hindered, as schematically shown in bottom view **9.** Measuring unit **3** can not anymore detect the intensity of electromagnetic radiation of the whole area of the channel.

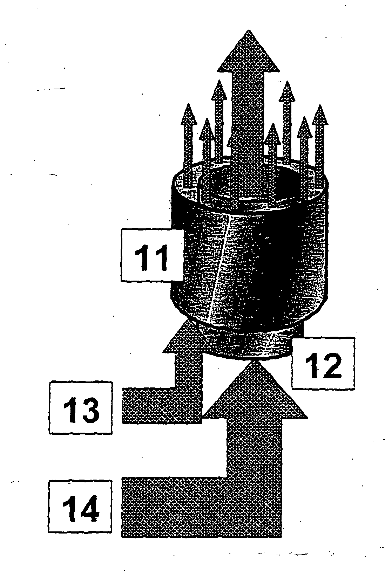

Figure **3** shows in detail, how the measuring channel (indicated as **A** in Figure **1)** can be formed. Preferably a set of two concentric tubes is used. The measuring channel preferably includes an outer tube **11** and an inner tube **12** such that different gases or gas mixtures can blown into the container. For example a gas stream **13** comprising nitrogen-gas and/or argon, and methane may be passed through the inner tube **12,** whereas a gas stream comprising nitrogen-gas and/or argon, and oxygen may be passed through the outer tube. Inner tube **12** also forms the measuring channel. Thereby oxygen cannot affect measuring.

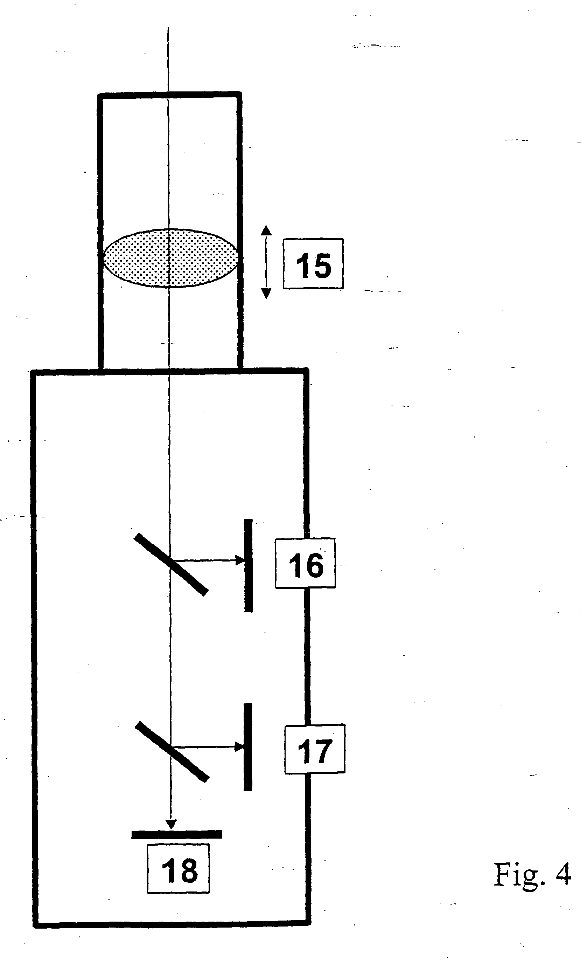

Figure **4** schematically shows a preferred embodiment of measuring unit **3** (Fig. **1).** It includes an adjustable lens **15,** two adjustable mirrors in combination with two pyrometer detectors **16, 17** and a detector **18** for collecting a video signal. Adjustable lens **15** is preferably an autofocus lens and driven by a motor (not shown).

The process for determining the interval for passing the oxygen-containing gas through the tuyere is started by detecting electromagnetic radiation emanating from a spot in the interior of the melt by means of a dual wavelength pyrometer and comparing the intensity of the pyrometer signals with the ratio of the pyrometer signals. The interval for passing the oxygen-containing gas through the tuyere is initiated upon the condition that the combined intensity of the signals falls below a predetermined threshold value and that the ratio of the signals remains substantially constant. The threshold value needs to be pre-determined only once visually on the basis of the image of the video signal. On the basis of the image it is decided whether the status of clogging is reached, and the corresponding intensity of the combined pyrometer signals is determined. This threshold value is then used for automatic initiation of the intervall for passing the oxygen-containing gas through the tuyere.

The concept that resides in the use of a dual wavelength pyrometer instead of a standard pyrometer. In addition to the information about the intensity of each of the two wavelengths that are measured, a quotient of two wavelengths can be calculated.

This creates additional information, which can be used to determine the point in time at which oxygen has to be blown through the measuring tuyere. If only the intensity of one wavelength is measured it is not possible to decide whether the change in the intensity is caused by a change of the temperature of the melt or because a skull is being formed at the end of the tuyere. By measuring the intensities of two wavelengths and correlating them with each other, e.g. by forming the quotient of both values, information can be obtained about the reason of such a change. For example, if the values of the measured intensities both fall but the quotient of these values is about constant, it can be assumed, that the tuyere is being clogged by a skull, whereas, e.g., in case the values of the measured intensities both fall but the ratio of both intensities is changing, it can be assumed, that the temperature of the melt is changing.

Therefore it is an advantage of the process according to the present invention, that oxygen is not unnecessarily blown through the measuring channel only because the intensity of the pyrometer signal falls below a predetermined threshold value.

It has surprisingly turned out that with such embodiment it is also possible to adjust the optical axis of the instrument for measuring electromagnetic radiation, such as the pyrometer and the spectrometer.

To adjust the one or more measuring devices, with a dual wavelength pyrometer and/or a spectrometer being preferred, its/their optical axis/axes is/are moved until the near end of the measuring channel and the perspective image of its far end is depicted in a regular fashion according to the geometry of the measuring channel, e.g. a regular tubular measuring channel will result in a circular image. This adjustment is preferably performed using the video camera. For this purpose the video camera and the instrument for measuring electromagnetic radiation are arranged along one optical path.

The adjustment is carried out on the basis of the video image by varying the orientation of the instrument(s) and the video camera such that the first end and second end in the video image form concentric circles is another object of the present invention.

The optimal position of the measuring device(s), i.e. the dual wavelength pyrometer and/or the spectrometer is reached when the geometries of both ends of the measuring channel depict concentric images, i.e. in case of the above mentioned (as an example) tubular measuring channel concentric circles would have to be obtained. To visualize the "near end" of the measuring channel, i.e. the end of the measuring channel that is directed to the measuring device(s) and the camera, it is advisable to use an auxiliary source of light.

It has surprisingly been found out that with the present configuration it is also possible to measure the length of the tuyere passing through the metallurgical vessel **3**. This information is important because it is an indication of the wear of the lining of the container. The information is also needed for focussing the laser beam.

For this purpose, the lens system of the autofocus video camera is adjusted so that the first end of the tuyere facing the interior of the metallurgical vessel is in focus. The length of the tuyere is determined on the basis of the distance of the focus and the known position of the second end of the tuyere with respect to the camera.

With this information, the laser beam can be focussed in such a way, that a intensity that is sufficient to form a plasma, the radiation of which can be detected by the spectrometer, is only present at the surface of the melt to be analyzed or inside the melt, but is not inside the gas cavity formed by the gas blowing through the measuring channel.

## Claims

1. Process for keeping a tuyere passing through a metallurgical vessel free of a skull by intermittendly passing an oxygen-containing gas through the tuyere to dissolve the skull, wherein it is determined that an interval for passing said oxygen-containing gas through the tuyere needs to be started by detecting through the tuyere electromagnetic radiation emanating from a spot in the interior of the melt by means of a dual wavelength pyrometer and comparing the intensity of the pyrometer signals with the ratio of the pyrometer signals, and initiating said intervall for passing said oxygen-containing gas through the tuyere, upon the condition that the combined intensity of the signals falls below a predetermined threshold value and that the ratio of the signals remains substantially constant.

2. The process of claim 1 wherein said threshold value is determined by using a video camera which is arranged with the pyrometer along one optical path and by setting into relation the intensity of the pyrometer signal with the image of the video camera, deciding on the basis of the video image whether a status of clogging is reached and determining the corresponding intensity value of the combined pyrometer signals.

3. The process of claim 1, wherein a video camera is used for adjusting the optical axis of a measuring unit (3) including a video detector (18) and said dual wavelength pyrometer and where the adjustment is carried out on the basis of the video image by varying the orientation of the measuring unit (3) such that the first end and second end in the video image form concentric circles.

4. The process of claim 1, wherein the length of the tuyere passing through a metallurgical vessel having a first end facing the interior of said metallurgical vessel and a second end facing the exterior of said metallurgical vessel is measured by means of an autofocus video camera, wherein the lens system of the autofocus video camera is adjusted so that the first end of the tuyere facing the interior of said metallurgical vessel is in focus and the length of said tuyere is determined on the basis of the distance of the focus and the known position of said second end of the tuyere with respect to the camera.

5. Apparatus for carrying out the processes of claims 1 to 4 for keeping a tuyere passing through a metallurgical vessel free of a skull comprising:
(a) means for intermittendly passing an oxygen-containing gas through the tuyere,
(b) a measuring unit (3) including an autofocus video detector (15, 18) and a dual wavelength pyrometer for detecting through the tuyere electromagnetic radiation emanating from a spot in the interior of the melt,
(c) means for determining that an interval for passing said oxygen-containing gas through the tuyere needs to be started by comparing the intensity of the pyrometer signals with the ratio of the pyrometer signals,
(d) means for initiating said interval upon the condition that the combined intensity of the signals falls below a predetermined threshold value and that the ratio of the signals remains substantially constant,
(e) means for varying the orientation of the measuring unit (3), and
(f) optionally a further detector for measuring electromagnetic radiation emanating from the interior of the vessel.

6. The apparatus of claim 5 further comprising a laser device suitable for creating a plasma in the interior of said metallurgical vessel, and wherein the further detector is a spectrometer capable of detecting electromagnetic radiation emanating from said plasma.

7. The apparatus of claim 5 or 6 which is connected to the interior of said metallurgical vessel by means of a tube which is passed through the tuyere.

## Patentansprüche

1. Verfahren, um eine Blasdüse, die ein metallurgisches Gefäß durchdringt, frei von Pfannenresten zu halten, indem intermittierend ein sauerstoffhaltiges Gas durch die Blasdüse geleitet wird, um den Pfannenrest zu lösen, wobei bestimmt wird, dass ein Intervall für das Durchleiten des sauerstoffhaltigen Gases durch die Blasdüse gestartet werden muss, indem durch die Blasdüse hindurch elektromagnetische Strahlung, die aus einem Fleck im Inneren der Schmelze austritt, mittels eines Doppelwellenlängenpyrometers detektiert wird und die Intensität der Pyrometersignale mit dem Verhältnis der Pyrometersignale verglichen wird, und das Intervall für das Durchleiten des sauerstoffhaltigen Gases unter der Bedingung initiiert wird, dass die kombinierte Intensität der Signale unter einen festgelegten Schwellenwert sinkt und das Verhältnis der Signale im Wesentlichen konstant bleibt.

2. Verfahren nach Anspruch 1, bei dem der Schwellenwert unter Verwendung einer Videokamera bestimmt wird, die mit dem Pyrometer entlang eines optischen Wegs angeordnet ist, und die Intensität des Pyrometersignals in Beziehung mit dem Bild der Videokamera gesetzt wird, wobei auf Grundlage des Videobilds entschieden wird, ob ein Verstopfungszustand erreicht worden ist, und der entsprechende Intensitätswert der kombinierten Pyrometersignale bestimmt wird.

3. Verfahren nach Anspruch 1, bei dem eine Videokamera verwendet wird, um die optische Achse einer Messanlage (3) einschließlich eines Videodetektors (18) und des Doppelwellenlängenpyrometers zu justieren, und wobei die Justierung auf Grundlage des Videobilds durchgeführt wird, indem die Orientierung der Messanlage (3) so variiert wird, dass das erste Ende und das zweite Ende in dem Videobild konzentrische Kreise bilden.

4. Verfahren nach Anspruch 1, bei dem die Länge der Blasdüse, die ein metallurgisches Gefäß durchdringt, mit einem ersten Ende, dass zu dem Inneren des metallurgischen Gefäßes weist, und einem zweiten Ende, das zu dem Äußeren des metallurgischen Gefäßes weist, mittels einer Autofokus-Videokamera gemessen wird, wobei das Linsensystem der Autofokus-Videokamera so justiert wird, dass das erste Ende der Blasdüse, das zu dem Inneren des metallurgischen Gefäßes weist, im Fokus ist und die Länge der Blasdüse auf der Grundlage des Abstands des Fokus und der bekannten Position des zweiten Endes der Blasdüse in Bezug zu der Kamera bestimmt wird.

5. Vorrichtung zur Durchführung der Verfahren der Ansprüche 1 bis 4, um eine Blasdüse, die ein metallurgisches Gefäß durchdringt, frei von einem Pfannenrest zu halten, die
(a) Mittel zum intermittierenden Leiten eines sauerstoffhaltigen Gases durch die Blasdüse,
(b) eine Messanlage (3), die einen Autofokus-Videodetektor (15, 18) und ein Doppelwellenlängenpyrometer einschließt, zum Detektieren elektromagnetischer Strahlung, die aus einem Fleck im Inneren der Schmelze austritt, durch die Blasdüse hindurch;
(c) Mittel zum Bestimmen, dass ein Intervall zum Leiten des sauerstoffhaltigen Gases durch die Blasdüse gestartet werden muss, indem die Intensität der Pyrometersignale mit dem Verhältnis der Pyrometersignale verglichen wird,
(d) Mittel zum Initiieren dieses Intervalls bei dem Zustand, dass die kombinierte Intensität der Signale unter einen festgelegten Schwellenwert absinkt und das Verhältnis der Signale im Wesentlichen konstant bleibt,
(e) Mittel zum Variieren der Orientierung der Messanlage (3) und
(f) gegebenenfalls einen weiteren Detektor umfasst, um elektromagnetische Strahlung zu messen, die aus dem Inneren des Gefäßes austritt.

6. Vorrichtung nach Anspruch 5, die ferner ein Lasergerät umfasst, das zum Erzeugen eines Plasmas im Inneren des metallurgischen Gefäßes geeignet ist, und wobei der weitere Detektor ein Spektrometer ist, das aus dem Plasma austretende elektromagnetische Strahlung detektieren kann.

7. Vorrichtung nach Anspruch 5 oder 6, die mittels eines Rohrs, das die Blasdüse durchdringt, mit dem Inneren des metallurgischen Gefäßes verbunden ist.

## Revendications

1. Procédé permettant d'éviter la formation d'un fond de poche dans une tuyère traversant un récipient métallurgique en injectant de manière intermittente un gaz contenant de l'oxygène à travers la tuyère afin de dissoudre le fond de poche, dans lequel on détermine qu'il est nécessaire d'établir un intervalle d'injection dudit gaz contenant de l'oxygène à travers la tuyère en détectant à travers la tuyère le rayonnement électromagnétique émanant d'un point de l'intérieur du bain au moyen d'un pyromètre à double longueur d'onde et en comparant l'intensité des signaux du pyromètre au rapport des signaux du pyromètre, et en établissant ledit intervalle d'injection dudit gaz contenant de l'oxygène à travers la tuyère, si l'intensité combinée des signaux est inférieure à une valeur de seuil prédéterminée et le rapport des signaux reste sensiblement constant.

2. Procédé selon la revendication 1, dans lequel ladite valeur de seuil est déterminée en utilisant une caméra vidéo qui est agencée avec le pyromètre le long d'un chemin optique et en mettant en relation l'intensité du signal du pyromètre avec l'image de la caméra vidéo, en décidant sur la base de l'image vidéo si un état d'encrassement est atteint et en déterminant la valeur d'intensité correspondante des signaux combinés du pyromètre.

3. Procédé selon la revendication 1, dans lequel une caméra vidéo est utilisée pour régler l'axe optique d'un organe de mesure (3) comportant un détecteur vidéo (18) et ledit pyromètre à double longueur d'onde, et où le réglage est réalisé sur la base de l'image vidéo en changeant l'orientation de l'organe de mesure (3) de façon à ce que la première extrémité et la seconde extrémité dans l'image vidéo forment des cercles concentriques.

4. Procédé selon la revendication 1, dans lequel la longueur de la tuyère traversant un récipient métallurgique ayant une première extrémité faisant face à l'intérieur dudit récipient métallurgique et une seconde extrémité faisant face à l'extérieur dudit récipient métallurgique est mesurée au moyen d'une caméra vidéo à mise au point automatique, dans lequel le système de lentilles de la caméra vidéo à mise au point automatique est réglé de sorte que la première extrémité de la tuyère faisant face à l'intérieur dudit récipient métallurgique soit au point de focalisation et la longueur de ladite tuyère est déterminée sur la base de la distance du foyer et de la position connue de ladite seconde extrémité de la tuyère par rapport à la caméra.

5. Appareil permettant de réaliser les procédés des revendications 1 à 4, permettant d'éviter la formation d'un fond de poche dans une tuyère traversant un récipient métallurgique comprenant :
(a) des moyens permettant d'injecter de manière intermittente un gaz contenant de l'oxygène à travers la tuyère,
(b) un organe de mesure (3) comportant un détecteur vidéo à mise au point automatique (15, 18) et un pyromètre à double longueur d'onde permettant de détecter à travers la tuyère le rayonnement électromagnétique émanant d'un point de l'intérieur du bain,
(c) des moyens permettant de déterminer qu'il est nécessaire d'établir un intervalle d'injection dudit gaz contenant de l'oxygène à travers la tuyère en comparant l'intensité des signaux du pyromètre au rapport des signaux du pyromètre,
(d) des moyens permettant d'établir ledit intervalle si l'intensité combinée des signaux est inférieure à une valeur de seuil prédéterminée et le rapport des signaux reste sensiblement constant,
(e) des moyens permettant de changer l'orientation de l'organe de mesure (3), et
(f) en option, un autre détecteur permettant de mesurer le rayonnement électromagnétique émanant de l'intérieur du récipient.

6. Appareil selon la revendication 5, comprenant en outre un dispositif laser adapté pour créer un plasma à l'intérieur dudit récipient métallurgique, et dans lequel l'autre détecteur est un spectromètre capable de détecter le rayonnement électromagnétique émanant dudit plasma.

7. Appareil selon la revendication 5 ou 6, qui est connecté à l'intérieur dudit récipient métallurgique au moyen d'un tube qui traverse la tuyère.
